# EUROPÄISCHE PATENTSCHRIFT

(11) **EP 2 603 014 B1**
(45) Veröffentlichungstag und Bekanntmachung des Hinweises auf die Patenterteilung: **28.11.2018**
(21) Anmeldenummer: 11192253.0
(22) Anmeldetag: 06.12.2011
(51) Int. Cl.: H04N 21/482, H04N 21/8405

(54) **Bereitstellen einer Suchfunktion mit einem digitalen Fernsehempfänger**
Provision of a search function on a digital television receiver
Préparation d'une fonction de recherche dotée d'un récepteur de télévision numérique

(43) Veröffentlichungstag der Anmeldung: 12.06.2013
(73) Patentinhaber: TechniSat Digital GmbH, 54550 Daun (DE)
(72) Erfinder: Ciechan, Kamil, 22-360 Rejowiec (PL); Despang, Dominique, 01465 Dresden (DE); Kriszick, Swantje, 01159 Dresden (DE); Krause, Jens, 01917 Kamenz (DE); Rother, Norman, 01187 Dresden (DE); Schmidt, Sebastian, 01157 Dresden (DE)

(56) Entgegenhaltungen:
- EP-A1- 2 073 534
- WO-A2-2011/142922
- US-A1- 2005 228 806
- US-A1- 2009 064 228
- US-A1- 2011 099 161
- US-A1- 2011 179 453
- US-A1- 2011 267 291

## Beschreibung

Die vorliegende Erfindung betrifft digitale Fernsehempfänger, die einem Nutzer eine komplexe und komfortable Suchfunktion zu Medieninhalten oder Programmbeiträgen, die über Kabel, Satellit oder terrestrisch empfangbar sind, bereitstellen.

### Technischer Hintergrund

Fernsehempfänger für den digitalen Videorundfunk können neben dem Inhalt von Hörrundfunk- und Fernsehsendungen auch den Inhalt anderer Medienquellen, beispielsweise von Audio- und Videoabspielgeräten, Fotospeichermedien, beziehungsweise als Hybridempfänger auch Inhalte aus dem Internet wiedergeben.

Zum einheitlichen Steuern und Verwalten der komplexen Funktionsstruktur eines digitalen Fernsehempfängers dient eine auf den Empfängertyp angepasste Empfänger-Firmware. Im Interesse einer nutzerfreundlichen Bedienbarkeit stellt die empfängerspezifische Firmware dem Nutzer eine prozessorgestützte grafische Benutzerschnittstelle zur Verfügung, welche als wesentliche Bedienkomponente eine interaktive Programmführungseinrichtung enthält.

Die interaktive Programmführungseinrichtung nutzt eine Rundfunkdienstliste mit Einstellinformation zum digitalen Videorundfunk sowie die Programmbegleitinformation zu den empfangbaren Programmbeiträgen, welche von den Mediendienstanbietern bereitgestellt und in Speichermitteln des digitalen Fernsehempfängers gespeichert werden. Die Programmbegleitinformation zu den Medieninhalten, kurz Begleitinformation genannt, wird regelmäßig von den Mediendienstanbietern aktualisiert und zum Empfang bereitgestellt.
Die Aktualisierung der Begleitinformation erfolgt mindestens einmal am Tag, vorzugsweise vor Beginn des Abendprogramms, auch im ausgeschalteten Zustand des Fernsehempfängers.
Der digitale Fernsehempfänger entsprechend der vorliegenden Erfindung verfügt über ein integriertes PC-Betriebssystem, eine Gerätesteuerung und integrierte Empfangsteile zum Empfangen der Audio- und Videosignale sowie von Informationssignalen und ermöglicht einen Zugriff auf interaktive Dienste. Der digitale Fernsehempfänger verfügt über Speichermittel, interne Mittel zum Empfangen, Aufbereiten, Aktualisieren, Verwalten und zum Präsentieren der Begleitinformation zu den Programmbeiträgen beziehungsweise Medieninhalten in verschiedenen Menüs. Die Menüs werden nach Aufruf generiert und umfassen immer die aktuelle Begleitinformation.

In den nichtflüchtigen Speichermitteln kann, beispielsweise in einer relationalen Datenbank, Programminformation, wie die Begleitinformation und Zusatzinformation zu den Medieninhalten, und zusätzlich Suchergebnisse sowie Suchbegriffe gespeichert werden. Für die Erfindung ist es unerheblich, ob der Fernsehempfänger über eigene Audio- und Videowiedergabemittel verfügt oder mit diesen, über Kabel oder kabellos, verbunden ist, wie eine sogenannte ,Set-Top-Box', die einem Fernsehgerät vorgeschaltet sein kann. Zu den digitalen Fernsehempfängern im Sinne der vorliegenden Erfindung zählen solche Empfänger, die Medieninhalte, auch als Programmbeiträge bekannt, von herkömmlichen Rundfunkdienstanbietern, wie beispielsweise "ARD" und "ZDF" als Vertreter der öffentlich-rechtlichen Sendeanstalten, empfangen. Zusätzlich ermöglicht der digitale Fernsehempfänger über entsprechende Verbindungen einen Zugriff auf interaktive Mediendienste, wie zum Beispiel "Yellow Map" einem elektronischen Branchenbuch, und Mediatheken, die von Rundfunkdienstanbietern zum Zugriff bereitgestellt werden.

Digitale Fernsehempfänger entsprechend der vorliegenden Erfindung beziehen die Begleitinformation zu aktuell laufenden und nachfolgend empfangbaren Medieninhalten in Form von Multimediadaten. Die Multimediadaten werden beispielsweise von Mediendienstanbietern und Rundfunkanbietern über die verschiedenen Übertragungswege, beispielsweise über Breitbandkabel, über terrestrische Übertragung und Satellitenübertragung, unter Verwendung verschiedener Orbitpositionen bereitgestellt. Ein zusätzlicher Übertragungsweg ist das Telekommunikationsnetz, über das vom Fernsehempfänger auch Begleitinformation zu den Medieninhalten abrufbar ist sowie ein Zugriff auf Mediendienste ermöglicht wird. Die Multimediadaten werden im Weiteren als Daten bezeichnet.
Begleitinformation zu Medieninhalten ist neben komprimierter Video- und Audioinformation beispielsweise beim digitalen Videorundfunk in Datenpaketen enthalten. Diese Datenpakete beinhalten die sogenannte ,DVB-Serviceinformation'. Die von digitalen Fernsehempfängern genutzte DVB-Serviceinformation bietet insbesondere bei einer Satellitenübertragung den Vorteil, dass Transportströme gegenüber einer analogen Signalübertragung in relativ kurzen Zeitabständen eine wesentlich größere Menge an Datenpaketen transportieren können.

Zu den Mediendiensten zählen Fernsehrundfunkdienste, Hörrundfunkdienste und solche Dienste, wie Bezahlfernsehen, welche über das Internet ermöglicht werden, wie die Mediatheken, Videoanbieterdienste sowie Recherchedienste. Somit wird einem Nutzer ermöglicht, über den Fernsehempfänger beispielsweise auf Medieninhalte von Mediatheken, Videoanbietern sowie auf Speichermittel zuzugreifen, die nicht im Fernsehempfänger integriert sein müssen.
Der Fernsehempfänger stellt dem Nutzer verschiedene Funktionen bereit, wie ein Aufrufen von Menüs, welche über ein Videowiedergabemittel, beispielsweise dem Bildwiedergabeschirm, ausgegeben werden und beispielsweise einen direkten oder zeitverzögerten Wechsel von einem wiedergegebenen Mediendienst auf einen anderen Mediendienst gewährleisten. Zu den Funktionen zählen auch ein direktes Aufnehmen von einem Medieninhalt, welcher gerade empfangen und am Bildwiedergabeschirm ausgegeben wird, sowie ein zeitverzögertes Aufnehmen von einem Medieninhalt, der zukünftig zum Empfang bereitgestellt wird, und die Suchfunktion nach einem Medieninhalt, welcher den Nutzer interessiert.

Der zeitverzögerte Wechsel von einem eingestellten auf einen anderen Medien- oder Programmdienst wird über einen sogenannten Umschalt-Timer realisiert und eine zeitverzögerte Aufnahme über einen Aufnahme-Timer.

Zu den Mediendiensten zählen "Das Erste" und beispielsweise der "WDR", welche die "ARD" als Mediendienstanbieter, auch als Rundfunkdienstanbieter bekannt, zum Empfang bereitstellt. Beispielsweise das "ZDF HD" und "arte HD" zählen zu den Mediendiensten, die von Mediendienstanbieter "ZDF" zum Empfang beispielsweise über einen Satellitenempfänger oder zum Abruf über das Internet bereitgestellt werden.

Die Programmführungseinrichtung des digitalen Fernsehempfängers generiert verschiedene Menüs, nach Aufruf durch den Nutzer, und veranlasst deren Ausgabe am Bildwiedergabeschirm. Diese Menüs beinhalten beispielsweise Begleitinformation zu Medieninhalten in Form einer elektronischen Programmzeitschrift oder dienen zur Anpassung von Geräteeinstellungen und ermöglichen das Auslösen von Funktionen wie des Aufnahme-Timers oder das Auslösen der Suchfunktion nach einem Programmbeitrag.

Die elektronische Programmzeitschrift, auch als EPG bekannt, weist mehrere verschiedene Menüseiten auf, die nach Aufruf generiert werden. Eine der Menüseiten gibt am Bildwiedergabeschirm beispielsweise in Zeilen Begleitinformation zu den aktuell empfangbaren Medieninhalten mit Information zu den Programmdienstanbietern aus. Eine andere Menüseite weist Begleitinformation zu in der Zukunft empfangbaren Medieninhalten auf. Ferner können über die in der Programmzeitschrift enthaltenen Auswahlfelder Funktionen ausgewählt und ausgelöst werden. Die Begleitinformation wird regelmäßig aktualisiert und mit den aktualisierten Daten auch die Information, welche die Programmzeitschrift aufweist.

Ein anderes Menü betrifft die Suchfunktion, welche von der Programmführungseinrichtung nach Empfang eines Suchbegriffes und dem Bestätigen des Suchbegriffes gestartet wird. Suchbegriffe bestehen aus Zeichen oder Zeichenketten und können unter anderem der Titel von einem Medieninhalt, der Name einer Person, wie eines Schauspielers oder Regisseurs, oder Kategorien, wie Sport, Kultur/Bildung, Wirtschaft/Politik oder Nachrichten, sein.

Der Medieninhalt ist durch die Begleitinformation, wie dem Titel des Medieninhaltes, den Zeitpunkt der Bereitstellung des Medieninhaltes, der sogenannten Bereitstellungszeit, durch die Bezeichnung des Mediendienstes, der den Medieninhalt zum Empfang bereitstellt, und mögliche Zusatzinformation gekennzeichnet. Die Begleitinformation und Attribute, wie Genres, denen die Medieninhalte zugeordnet sind, werden in den nichtflüchtigen Speichermitteln, in einer relationalen Datenbank, des Fernsehempfängers gespeichert.

In der Zusatzinformation sind Daten enthalten, welche die Begleitinformation ergänzen, wie beispielsweise Inhaltsangaben zum Medieninhalt, Namen vom Regisseur, Schauspielern, Angaben zum Produktionsland, Erscheinungsjahr und Angaben zu der Kategorie, welcher der Medieninhalt entsprechend seines Inhaltes zugeordnet ist. Weitere Angaben der Zusatzinformation sind beispielsweise Angaben wie Folgen- oder Seriennummer des Medieninhaltes oder ein weiterer ergänzender Titel einer Serie, wie beispielsweise zum Medieninhalt "Elefant, Tiger & Co." gehört der ergänzende Titel "Vorsicht Kamera" sowie eine zusätzliche kurze Beschreibung des Medieninhalts.

Das ständig wachsende Angebot an Medieninhalten und an Zugriffsmöglichkeiten auf die Mediendienste, Rundfunkdienste und Internetdienste führt bei den Nutzern zu einem erhöhten Bedürfnis nach einer komfortablen Navigation durch die bereitgestellten Medieninhalte, zum schnellen Zugriff auf die Mediendienste sowie deren Begleitinformation, welche die Medieninhalte charakterisiert. Insbesondere besteht der Bedarf nach einer besonders komfortablen Suchfunktion nach einem Medieninhalt, der den Nutzer besonders interessiert. Das Ergebnis der Suchfunktion dient unterschiedlichen Zielen, beispielsweise zum Gewinnen von Information einen Medieninhalt betreffend, nach dem der Nutzer seine Suche ausgerichtet hat, zum Auslösen von Funktionen, wie einer Aufnahme von einem in der Zukunft zum Empfang beziehungsweise zum Abruf bereitgestellten Medieninhaltes, sowie zum Umschalten von einem eingestellten Programmdienst auf einen anderen Programmdienst, um einen Medieninhalt, der vom anderen Programmdienst bereitgestellt wird, wiederzugeben.

Aus dem technischen Hintergrund ist ein elektronischer Programmführer bekannt, auch kurz als EPG bezeichnet, welcher Information zum aktuell laufenden oder zu einem späteren Zeitpunkt empfangbaren Programm oder Medieninhalt umfasst und welcher einem Nutzer zur weiteren Verwendung visuell an einem Monitor des Fernsehempfängers angezeigt wird.

Aus der DE69525377T3 sind ein elektronischer Fernsehprogrammführer und ein entsprechendes Verfahren bekannt, bei denen die Suche nach Programmen derart ermöglicht wird, dass der Anwender ein oder jedes der ersten n-Zeichen eines zu suchenden Titels eingibt. Die Ausgabe des Suchergebnisses erfolgt dabei in alphabetischer Reihenfolge. Mit Beginn der Eingabe des Suchbegriffes wird sofort ein erstes Suchergebnis generiert sowie angezeigt, dieses Ergebnis wird während der weiteren Zeicheneingabe in Echtzeit fortlaufend aktualisiert und dem Nutzer angezeigt.

Aus der Druckschrift EP1004200B1 ist eine Aufnahmevorrichtung mit Schlüsselworterkennungsmitteln bekannt, welche Teile eines Programmtitels, der vom Nutzer zur Aufnahme ausgewählt wurde, abspeichern. Mit diesen von den Schlüsselworterkennungsmitteln automatisch ermittelten Schlüsselwörtern werden Suchalgorithmen angestoßen und die Aufnahmevorrichtung nimmt selbsttätig, auf der Basis dieser generierten Schlüsselwörter, Sendungen auf, welche für den Nutzer von Interesse sein könnten.
In der EP0908049B1 wird ein Fernsehprogrammierungssystem und Betriebsverfahren beschrieben, mit dem es dem Nutzer, ausgehend von einem vereinigten Verzeichnisführer mit Zugriff auf mehrere Programmquellen, ermöglicht werden soll, eine bestimmte Sendung auszuwählen. Das System erstellt dann eine Anzeige, aus welcher der Nutzer entnehmen kann, zu welchen Zeitpunkten die bestimmte nutzerdefinierte Sendung noch empfangbar ist, dabei wird die Angabe der entsprechenden Quellen ausgewiesen.
Aus der US2005/0246739 ist ein Service und eine Methode zum Bereitstellen eines einzelnen Zugriffspunktes bekannt, über den auf Audio- und Videoinhalte mehrerer Anbieter oder Quellen zugegriffen werden kann. Mit diesem Service und der Methode ist es möglich eine Suchanfrage nach Audio-Videoinhalten zu generieren, Filterkriterien beispielsweise nach einem, einen Nutzer interessierenden, Medieninhalt zu definieren. Die Suche nach dem Medieninhalt führt der Service über den einzelnen Zugriffspunkt durch und überprüft die Daten anhand des Suchbegriffes, die nicht geräteintern, sondern bei den Anbietern gespeichert sind. Ist dieser Zugriffspunkt oder die Verbindung gestört, kann eine Suche nicht durchgeführt werden, da keine Daten intern in der Vorrichtung, beispielsweise einem Fernsehempfänger, gespeichert sind.

US 2009/064228 A1 offenbart einen Fernsehempfänger nach dem Oberbegriff von Anspruch 1.

Nachteilig bei den bekannten Verfahren und Vorrichtungen ist, dass nach erfolgter Suche im Suchergebnis eine unüberschaubare Menge an Medieninhalten oder Programmbeiträgen aufgelistet ist, die Suche zu einem sehr umfassenden, unübersichtlichen Suchergebnis mit zu vielen Treffern führt.
Dieser Effekt beruht unter anderem auf der Tatsache, dass einige der bereitgestellten Medieninhalte mehrfach zu unterschiedlichen Zeiten und von unterschiedlichen Mediendienstanbietern, zum Empfang, Zugriff oder Kauf bereitgestellt werden.

### Beschreibung der Erfindung

Die Aufgabe der vorliegenden Erfindung besteht darin, einen digitalen Fernsehempfänger bereitzustellen, der eine komfortable und effektive Suchfunktion nach Medieninhalten gewährleistet und ausgehend vom Suchergebnis die Ausführung von weiteren Funktionen ermöglicht.
Die Aufgabe wird durch einen digitalen Fernsehempfänger und ein Verfahren für den digitalen Fernsehempfänger gelöst, der einem Nutzer die komfortable Suchfunktion nach Medieninhalten bereitstellt, die von Mediendiensten zum Empfang bereitgestellt werden und jeweils durch eine Begleitinformation definiert sind, welche Zeichenketten eines Titels sowie eine Bereitstellungszeit umfasst, wobei der Fernsehempfänger aufweist:
- Empfangsteile, die derart ausgebildet sind, dass sie eine Begleitinformation, die in Form von Daten übertragen wird, aus einem Datenstrom auslesen und an interne nichtflüchtige Speichermittel zur Speicherung weiterleiten können,
- Nutzungsdauer-Erfassungsmittel, welche derart ausgebildet sind, dass sie Zeitabschnitte ermitteln können, in denen der Fernsehempfänger sich im Empfangsbetrieb befindet und die Zeitabschnitte an die Speichermittel zur Speicherung weiterleiten können,
- eine Programmführungseinrichtung, die derart ausgebildet ist, dass sie:
   ∘ nach einem Aufruf ein Menü zu der Suchfunktion generieren kann, welches Felder zur Eingabe eines aus Zeichenketten bestehenden Suchbegriffes sowie zur Auswahl von Funktionen aufweist und an einem Bildwiedergabeschirm ausgegeben werden kann, und
   ∘ die Suchfunktion nach Beenden einer Eingabe im Menü durch den Nutzer ausführen kann und nach Übereinstimmungen der Zeichenkette des Suchbegriffes mit den Zeichenketten der Titel der in den Speichermitteln gespeicherten Begleitinformation suchen kann,
   dadurch gekennzeichnet, dass die Programmführungseinrichtung derart ausgebildet ist, dass sie:
   ∘ ein Suchergebnis zu den Medieninhalten dahin gehend überprüfen kann, ob die zur jeweiligen Begleitinformation gehörige Bereitstellungszeit eine Ausführung der ausgewählten Funktion ermöglicht,
   ∘ nach der Überprüfung das Suchergebnis am Bildwiedergabeschirm ausgeben kann, sodass nur diejenige Begleitinformation zu den Medieninhalten ausgegeben wird, deren Zeichenkette des Titels mit der Zeichenkette des Suchbegriffes übereinstimmt und deren Bereitstellungszeit die Ausführung der ausgewählten Funktion ermöglicht,
   ∘ das Suchergebnis zur Initiierung der ausgewählten Funktion in den Speichermitteln speichern kann und
   ∘ die Ausführung der Funktion entsprechend der Bereitstellungszeit durch eine Gerätesteuerung initiieren kann.

Die durch die Programmführungseinrichtung ausgeführte Suchfunktion ist besonders komfortabel, weil sie zusätzlich mit Filterkriterien optimiert werden kann und das Suchergebnis mit Funktionen verknüpft wird, die durch die Programmführungseinrichtung automatisch oder erst nach Bestätigung durch den Nutzer initiiert werden.

Die Erfindung wird anhand eines Ausführungsbeispieles sowie der nachfolgenden Figuren erklärt, wobei die Figuren darstellen:
- Figur 1:: den schematischen Aufbau eines digitalen Fernsehempfängers,
- Figur 2:: ein Menü zur Definition von Suchkriterien der Suchfunktion,
- Figur 3:: den schematischen Ablauf einer Suche mit einem Suchbegriff, zu dem bereits Begleitinformation empfangen wurde, und
- Figur 4:: den schematischen Ablauf einer Suche mit einem Suchbegriff, zu dem noch keine Begleitinformation empfangen wurde.

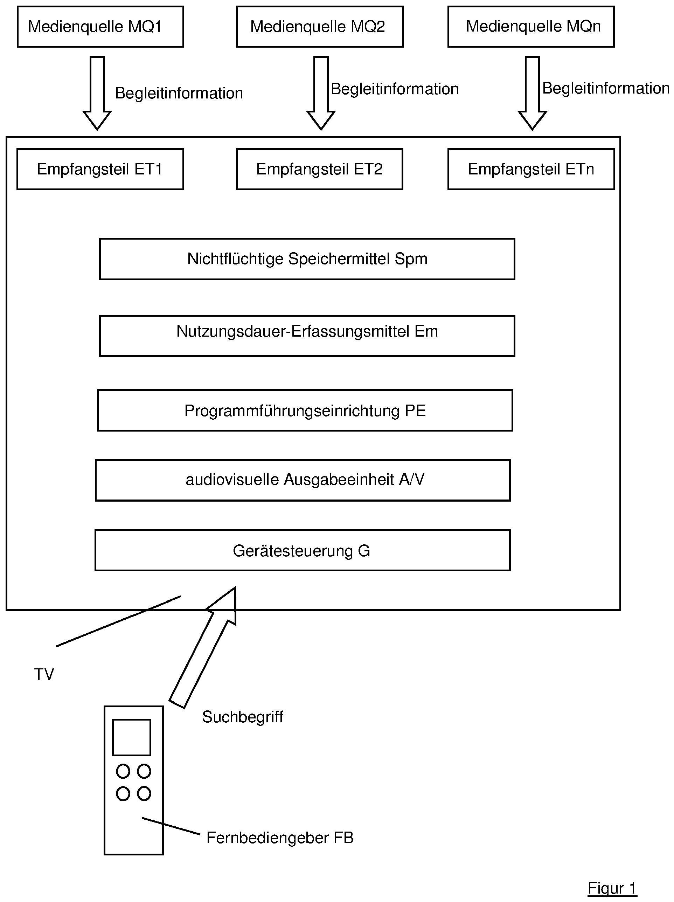

Die Figur 1 stellt den schematischen Aufbau der wesentlichen Elemente eines digitalen Fernsehempfängers TV gemäß der vorliegenden Erfindung dar, welcher dem Nutzer die komplexe und komfortable Suchfunktion ermöglicht.
Zu den wesentlichen Elementen zählen auch die Empfangsteile ET1 bis ETn mit Signalaufbereitung, die beispielsweise für den Rundfunkempfang über Satellit, Breitbandkabel, Antenne und über eine bidirektionale Verbindung zum Telekommunikationsnetz verfügen und beispielsweise Zugriff auf Medieninhalte des Internets ermöglichen. Weitere Elemente sind nichtflüchtige Speichermittel Spm, Nutzungsdauer-Erfassungsmittel Em, Medienquellen MQ1 bis Medienquellen MQn sowie die Programmführungseinrichtung PE. Zu weiteren Elementen des Fernsehempfängers TV zählt auch eine audiovisuelle Ausgabeeinheit A/V, welche beispielsweise einen Bildwiedergabeschirm und eine Lautsprechereinrichtung aufweist, sowie eine Fernbedieneinheit, welche einen Empfänger und einen Fernbediengeber FB umfasst. Mit dem Fernbediengeber FB werden nach Betätigung von einer oder mehreren Tasten Signale über Funk oder Infrarot an den Empfänger der Fernbedieneinheit, welcher im Fernsehempfänger TV integriert ist, gesendet. Der Fernbediengeber FB kann eine herkömmliche Fernbedienung sein, aber auch ein Gerät mit einem berührungsempfindlichen Bildschirm, eine Computermaus oder eine Tastatur sein.

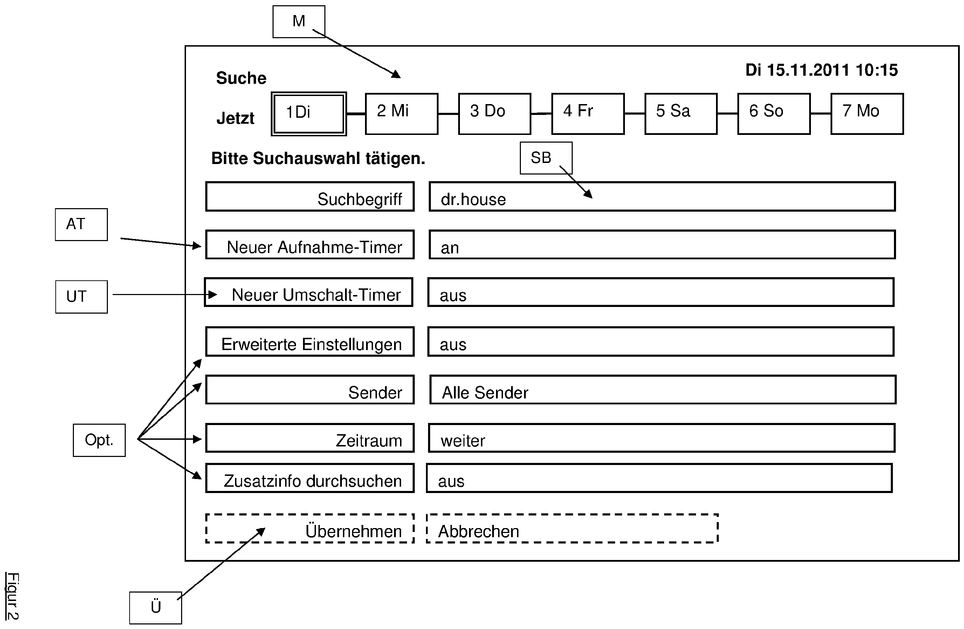

Die Ausgabe von verschiedenen Menüs, beispielsweise dem Menü zur Definition der Suchkriterien für die Suchfunktion entsprechend Figur 2, einer Übersicht zu empfangbaren Medieninhalten und die Ausgabe der Übersicht mit dem Suchergebnis kann über den Bildwiedergabeschirm, einen Monitor, visuell oder akustisch über die Lautsprechereinrichtung erfolgen.
Mithilfe eines weiteren Menüs werden Grundeinstellungen, wie Länder- oder Spracheinstellungen des Fernsehempfängers TV, vorgenommen. Im vorliegenden Beispiel wurde als Ländereinstellung Deutschland ausgewählt und in den Speichermitteln Spm gespeichert. Es können auch andere Länder wie Österreich, Italien, Frankreich oder Schweden ausgewählt werden.

Die Nutzungsdauer-Erfassungsmittel Em ermitteln Zeitabschnitte, in denen der Nutzer den Fernsehempfänger TV in einen Empfangsbetrieb versetzt hat und zur Wiedergabe sowie zum Verfolgen von aktuell empfangbaren Medieninhalten oder zur Wiedergabe von gespeicherten Medieninhalten nutzt. Die Medieninhalte können beispielsweise auf einer geräteinternen Festplatte oder auf einem anderen digitalen optischen Speichermedium gespeichert sein und über den Fernsehempfänger TV wiedergegeben werden. Die Zeitabschnitte können der Programmführungseinrichtung PE zur Planung von Aufnahmefunktionen dienen. Die Nutzungsdauer-Erfassungsmittel Em können die Zeitabschnitte anhand einer Systemzeit des Fernsehempfängers TV Wochentagen sowie der Uhrzeit, die dem jeweiligen Zeitpunkt des Versetzens vom Fernsehempfänger TV in den Empfangsbetrieb entspricht, zuordnen und die Zeitabschnitte mit der entsprechenden Zuordnung an die Speichermittel Spm zur Speicherung weiterleiten.

Diese Zeitabschnitte der Nutzungsdauer können zwischen der Arbeitswoche, am Wochenende und an Feiertagen variieren. Die erfassten Zeitbereiche sind durch Angaben zu einem Wochentag, einer Startzeit und der Dauer der Nutzung charakterisiert. Die Nutzungsdauer wird durch das Bestimmen der Zeitabschnitte ermittelt, die zwischen dem Versetzen des Fernsehempfängers TV in den Empfangsbetrieb beziehungsweise beim Verlassen eines Bereitschaftsbetriebes des Fernsehempfängers TV und dem Ausschalten beziehungsweise dem Versetzen des Fernsehempfängers TV in den Bereitschaftszustand vergeht. Der Bereitschaftszustand ist auch als "Stand-by" bekannt.
Zu jeder der Zustandsänderungen des Fernsehempfängers TV, beispielsweise beim Ein- und Ausschalten, werden entsprechende Marker gesetzt, welche die Nutzungsdauer-Erfassungsmittel Em zur Bestimmung der Zeitabschnitte verwenden.

Die Figur 2 zeigt ein Menü M zur Suchfunktion, das die Programmführungseinrichtung PE, nach Aufruf durch den Nutzer, zur Ausgabe am Bildwiedergabeschirm der audiovisuellen Ausgabeeinheit A/V generieren und ausgeben kann. Dieses Menü M dient zum Definieren von Suchkriterien und zum Auslösen der Suchfunktion nach Begleitinformation von Medieninhalten, die von Mediendiensten zum Empfang bereitgestellt werden. Der Titel eines Medieninhaltes als Bestandteil der Begleitinformation besteht aus Zeichenketten.

Das Menü M weist ein Feld zur Eingabe eines Suchbegriffes SB, der aus Zeichen einer oder mehrerer Zeichenketten besteht, sowie Felder zur Auswahl verschiedener Funktionen, wie zum Auslösen eines Aufnahme-Timers AT oder eines Umschalt-Timers UT, auf. Das Menü M umfasst zusätzlich Optionsfelder Opt., über die aus erweiterten Einstellungen zur Filterung des Suchergebnisses ausgewählt werden kann. Zu diesen Optionen zählt die Auswahl von einem Sender oder Mediendienst aus einer Mehrzahl von empfangbaren Mediendiensten, einem Zeitraum oder der gespeicherten Zusatzinformation, die bei der Ausführung der Such- funktion von der Programmführungseinrichtung PE berücksichtigt werden sollen.

Die Praxis hat gezeigt, dass es sinnvoll, zeitsparend und besonders komfortabel ist, die Suchfunktion gleich mit weiteren Funktionen, wie einem Aufnahme-Timer AT oder einem Umschalt-Timer UT, zu verknüpfen, anstatt erst nach der Suche im Suchergebnis diejenige Begleitinformation auszuwählen und zu markieren, deren entsprechender Medieninhalt aufgenommen werden soll.

Der Suchbegriff wird manuell vom Nutzer eingegeben oder kann nach Aufruf des Menüs M automatisch generiert werden, indem die Programmführungseinrichtung PE den Titel des aktuell am Bildwiedergabeschirm wiedergegebenen Medieninhaltes, der ebenso aus Zeichenketten besteht, aus den Speichermitteln Spm abruft und in das Feld SB übernimmt. Die manuelle Eingabe der Zeichenketten des Suchbegriffes kann beispielsweise mithilfe einer nicht dargestellten visuellen Tastatur erfolgen, aber es ist auch möglich, dass der automatisch generierte Suchbegriff vom Nutzer bearbeitet oder gelöscht und ein anderer eingegeben wird.
Nach Bestätigen der Eingabe oder Auswahl in den Feldern des Menüs M der Suchfunktion, durch Anwählen des Bestätigungsfeldes Ü, wird der Suchbegriff zur Speicherung an die nichtflüchtigen Speichermittel Spm von der Programmführungseinrichtung PE weitergeleitet, gleichzeitig das Menü M geschlossen und die Suchfunktion von der Programmführungseinrichtung PE gestartet.
Die Programmführungseinrichtung PE sucht nach dem Start der Suchfunktion nach Übereinstimmungen der Zeichenkette des Suchbegriffes mit den Zeichenketten der Titel der in den Speichermitteln Spm gespeicherten Begleitinformation.
Zusätzlich überprüft die Programmführungseinrichtung PE nach erfolgter Suche das Suchergebnis zu den Medieninhalten dahin gehend, ob die zur jeweiligen Begleitinformation gehörige Bereitstellungszeit eine Ausführung der ausgewählten Funktion ermöglicht. Das bedeutet, dass ein Medieninhalt im Suchergebnis nicht aufgeführt wird oder zur Aufnahme markiert wird, wenn der Medieninhalt bereits zum Empfang bereitgestellt und die Wiedergabe bereits begonnen hat, weil die Aufnahme nicht mehr vollständig aufgenommen werden kann. Ein anderer Grund einen Medieninhalt nicht im Suchergebnis aufzuführen liegt vor, wenn im selben Zeitraum bereits ein anderer Aufnahme-Timer beispielsweise manuell gesetzt wurde und die Aufnahmen wegen der Auslastung der Empfangsteile ET miteinander kollidieren würden.
Nach der Überprüfung wird das Suchergebnis von der Programmführungseinrichtung PE in einem separaten Menü, das in den Figuren nicht dargestellt ist, am Bildwiedergabeschirm ausgegeben.
Das ausgegebene Suchergebnis weist nur diejenige Begleitinformation zu den Medieninhalten aus, deren Zeichenkette des Titels mit der Zeichenkette des Suchbegriffes übereinstimmt und deren Bereitstellungszeit die Ausführung der ausgewählten Funktion ermöglicht. Die Ausgabe des Suchergebnisses mit der Begleitinformation erfolgt beispielsweise in einer Trefferübersicht, die entsprechend Nutzerwunsch von der Programmführungseinrichtung PE sortiert wird. Die Sortierung kann beispielsweise zeitabhängig oder nach Mediendienst erfolgen.
Die Programmführungseinrichtung PE leitet das Suchergebnis zur Initiierung der ausgewählten Funktion an die Speichermittel Spm zur Speicherung weiter und initiiert die Ausführung der Funktion entsprechend der Bereitstellungszeit durch eine Gerätesteuerung G. Die Programmführungseinrichtung PE kann die Initiierung der ausgewählten Funktion, wie den Aufnahme-Timer AT, automatisch oder erst durch Bestätigen durch den Nutzer ausführen.
Der in den Speichermitteln Spm gespeicherte Suchbegriff steht nach seiner Speicherung für eine erneute Suche zur Verfügung, beispielsweise wenn keine Übereinstimmung des Suchbegriffes mit der gespeicherten Begleitinformation festzustellen war, zur Dokumentation ausgeführter Suchfunktionen oder für eine erneute Suche zu einem späteren Zeitpunkt oder um eine Suchfunktion beispielsweise im Internet zu starten.
Das Ziel der vorliegenden Erfindung besteht auch darin, dass Aufnahmen andere Funktionen des Fernsehempfängers TV nicht blockieren, wenn Ausweichmöglichkeiten dadurch bestehen, dass ein Medieninhalt mehrfach zu unterschiedlichen Bereitstellungszeiten zum Empfang zur Verfügung steht. Aus diesem Grund berücksichtigt die Programmführungseinrichtung PE die von den Nutzungsdauer-Erfassungsmitteln Em ermittelten Zeitabschnitte bei der Initiierung von Aufnahmen von Medieninhalten nach erfolgter Suche.
Aus den Zeitabschnitten, in denen der Nutzer beispielsweise den Fernsehempfänger TV zur Wiedergabe von Medieninhalten nutzt, ergeben sich die Zeitabschnitte, in denen der Fernsehempfänger TV nicht zur Wiedergabe von Medieninhalten genutzt wird.
Die Programmführungseinrichtung PE wird bei der Planung und Abarbeitung von Aufnahme-Timern AT vorzugsweise versuchen die Aufnahmen dann zu initiieren, wenn der Fernsehempfänger TV laut ermittelter Nutzungsdauer zur Wiedergabe von Medieninhalten nicht genutzt wird.
Beispielsweise haben die Nutzungsdauer-Erfassungsmittel Em ermittelt, dass der Nutzer den Fernsehempfänger TV im Normalfall abends zwischen 19:00 Uhr und 22:40 Uhr zum Empfang und zur Wiedergabe von Medieninhalten nutzt, die aktuell empfangen werden oder gespeichert sind. Nach Eingabe von Suchkriterien in Menü M wurde von der Programmführungseinrichtung PE eine Suchfunktion zu einem Spielfilm in Verbindung mit einem Aufnahme-Timer AT gestartet. Dieser Spielfilm wird beispielsweise um 20:15 Uhr und um 1:00 Uhr zum Empfang bereitgestellt. Die Programmführungseinrichtung PE wird das Suchergebnis zur Ausgabe derart bearbeiten, dass im Suchergebnis der Spielfilm zweimal mit den entsprechenden Bereitstellungszeiten aufgeführt wird. Die Programmführungseinrichtung PE kann das Suchergebnis aber auch derart bearbeiten und am Bildwiedergabeschirm ausgeben, dass es nur den Spielfilm, der um 1:00 Uhr zum Empfang bereitgestellt wird, beinhaltet.

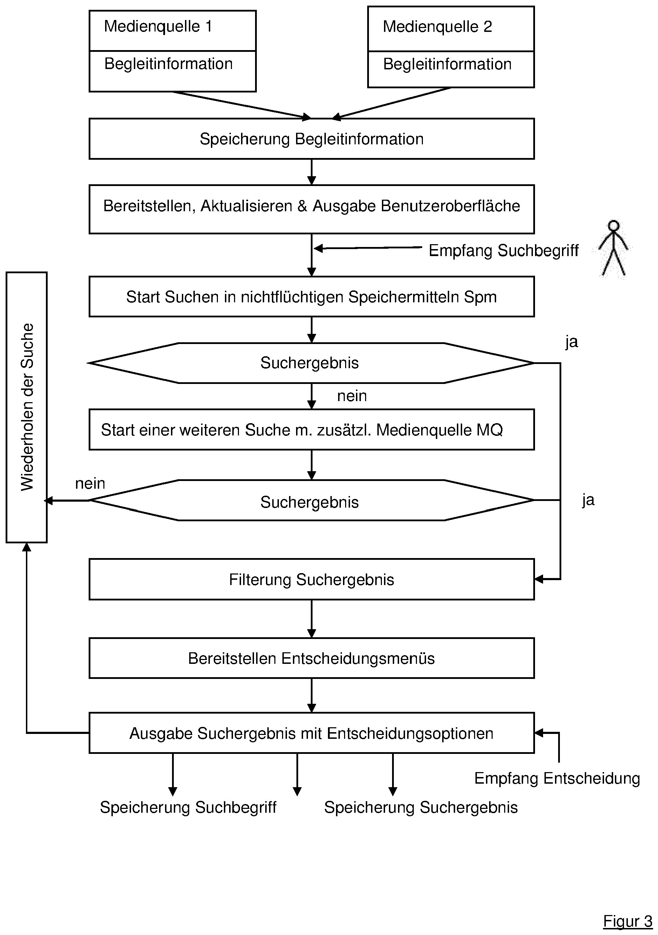

In der Figur 3 ist der schematische Ablauf einer Ausführungsform der Suchfunktion dargestellt, bei dem bereits Begleitinformation in den Speichermitteln Spm gespeichert ist, deren Zeichenkette des Titels mit der Zeichenkette des Suchbegriffs übereinstimmt. Der Fernsehempfänger TV empfängt von verschiedenen Medienquellen MQ, hier Medienquelle 1 und Medienquelle 2, Begleitinformation zu Medieninhalten, welche von den Empfangsteilen ET empfangen und in den nichtflüchtigen Speichermitteln Spm abgelegt wird. Die Anzahl der Medienquellen MQ ist nur der übersichtlichen Darstellung geschuldet auf zwei beschränkt worden. Bei der Medienquelle 1 handelt es sich beispielweise um ein Empfangsteil für Satellitenempfang und bei der Medienquelle 2 um ein Empfangsteil für terrestrischen Fernsehempfang. Zu den Medienquellen zählt auch das Telekommunikationsnetzwerk, welches über eine bidirektionale Verbindung erreichbar ist und somit beispielsweise Zugriff auf Bezahlfernsehanbieter ermöglicht.
Eine weitere Quelle für die Gewinnung der Begleitinformation kann auch ein sogenannter Tele- oder Videotext sein, über den Nachrichten, Texte oder bildhafte Information in der Austastlücke des Fernsehsignals übertragen werden und am Bildwiedergabeschirm des Fernsehempfängers TV ausgegeben werden können.
Aus der Begleitinformation zu den verschiedenen Medieninhalten, die in den nichtflüchtigen Speichermitteln Spm gespeichert ist, generiert die Programmführungseinrichtung PE nach Aufruf durch den Nutzer die Benutzeroberfläche mit der elektronischen Programmzeitschrift. Der Nutzer hat das Menü M zur Suchfunktion beispielsweise ausgehend von der Programmzeitschrift aufgerufen, einen Suchbegriff im Feld SB mithilfe der Fernbedienung, auch Fernbediengeber FB genannt, eingegeben und das Menü M verlassen. Die Programmführungseinrichtung PE liest den eingegebenen Suchbegriff aus. Der eingegebene Suchbegriff, welcher dem Titel eines bekannten Medieninhaltes, zum Beispiel des Spielfilmes "Eine Frage der Ehre", entspricht, besteht aus mehreren Zeichen einer Zeichenkette. Die Programmführungseinrichtung PE beginnt die Zeichenketten der gespeicherten Begleitinformation in einem ersten Schritt mit den Zeichenketten des Suchbegriffes zu vergleichen. Identifiziert die Programmführungseinrichtung PE in nichtflüchtigen Speichermitteln Spm Begleitinformation, deren Zeichenketten denen des Suchbegriffes entsprechen, wird das Suchergebnis automatisch von der Programmführungseinrichtung PE gefiltert. Die Filterung dient dazu, das Suchergebnis übersichtlich zu gestalten und Dopplungen von Medieninhalten zu vermeiden. Die mehrfache Aufführung eines Medieninhaltes im Suchergebnis kann daraus resultieren, dass identische Medieninhalte entweder von mehreren Mediendienstanbietern oder Mediendiensten zu einem identischen Zeitpunkt oder von einem Mediendienstanbieter zu verschiedenen Zeitpunkten zum Empfang bereitgestellt werden.
Beispielsweise kann der Spielfilm "Eine Frage der Ehre" mehrfach von der ARD über "Das Erste" und "Das Erste HD" jeweils am 24.11.2010 um 14:30 Uhr und 20:15 Uhr und vom ORF1 am 24.11.2010 um 20:15 Uhr zum Empfang bereitgestellt werden.
Die Programmführungseinrichtung PE erkennt nach Überprüfung der technischen Parameter, dass das ORF1 verschlüsselt ist und kein Empfang vom Medieninhalt "Eine Frage der Ehre" in Deutschland ohne zusätzliches Entschlüsselungsmodul über diesen Mediendienst möglich ist. Dieser Treffer wird von der Programmführungseinrichtung PE herausgefiltert, er ist nicht Bestandteil des Suchergebnisses, das dem Nutzer über den Bildwiedergabeschirm, der audiovisuellen Ausgabeeinheit A/V, ausgegeben wird.
Mit der Ausgabe des Suchergebnisses beispielsweise in einer Trefferübersicht, im vorliegenden Fall visuell über den Bildwiedergabeschirm, bietet die Programmführungseinrichtung PE dem Nutzer ein Entscheidungsmenü an, mit dem verschiedene Optionen verbunden sind, wie beispielsweise ein Auslösen einer Aufnahmefunktion oder der Kauf eines Medieninhaltes über das Internet. In dieser Ausführungsform der Erfindung wurde die Suchfunktion nicht gleich mit einer weiteren Funktion, wie einem Aufnahme-Timer AT, verbunden, sondern bietet diese Funktion dem Nutzer zur Auswahl erst nach ausgeführter Suchfunktion im Menü, welches das Suchergebnis aufweist, an.
Ist die Suche im ersten Schritt nicht erfolgreich, kann die Programmführungseinrichtung PE nach Nutzerwunsch mindestens in einem weiteren Schritt die Suche mit einer anderen Medienquelle, zum Beispiel dem Internet, weiterführen.
Führt die Suche zu keinem Suchergebnis, kann die Suche mit dem gespeicherten Suchbegriff wiederholt werden, nachdem eine Aktualisierung der in den nichtflüchtigen Speichermitteln Spm abgelegten Begleitinformation erfolgt ist oder der Suchbegriff geändert wurde.

In einer Ausführungsform der Erfindung kann das Suchergebnis durch eine Suche unter Nutzung einer Verbindung zu einer weiteren Medienquelle MQn, wie dem Internet, ergänzt und aktualisiert werden. Es kann beispielsweise geprüft werden, ob der Medieninhalt, beispielsweise über eine Mediathek, zum Empfang bereitgestellt oder über einen Videoanbieter zum Kauf angeboten wird.
Eine parallele Suche in den internen Speichermitteln und gleichzeitig im Internet ist nicht sinnvoll, weil das Suchergebnis zu viele Treffer beinhalten kann, unübersichtlich wäre und die Internetverbindung unnötig belasten kann. Eine Ausdehnung auf das Internet soll nur im Bedarfsfall ausgeführt werden, beispielsweise wenn eine Suche in den internen Speichermitteln Spm zu keinem Suchergebnis geführt hat.
Es werden verschiedene Quellen für den weiteren Schritt der Suchfunktion angegeben, die durch den Nutzer ausgewählt werden können.

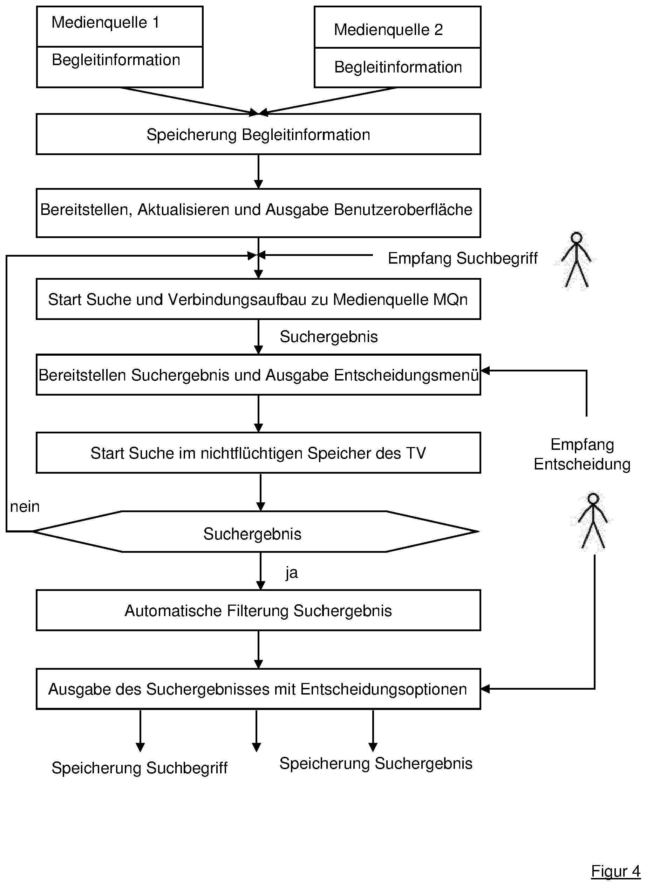

Figur 4 stellt den schematischen Ablauf einer Ausführungsform einer Suchfunktion dar, bei der die Programmführungseinrichtung PE nach einem Medieninhalt sucht, zu dem noch keine Daten in Form von Begleitinformation durch Medienquelle 1 und Medienquelle 2 empfangen und in den nichtflüchtigen Speichermitteln Spm abgelegt wurden. Die Programmführungseinrichtung PE liest als Suchbegriff aus dem Menü M beispielsweise den Namen des Buchautors Ken Follett aus und nutzt die Verbindung zur Medienquelle MQn, im vorliegenden Beispiel zum Internet, für die Ausführung der Suchfunktion. Es sind weitere Medienquellen MQn denkbar, mit denen der Fernsehempfänger TV über eine Kabelverbindung oder kabellos in Verbindung steht. Wurde im Internet ein Suchergebnis, zum Beispiel der Titel eines Medieninhaltes, der in Zusammenhang mit dem Suchbegriff Ken Follett steht, gefunden, nach dem Vergleich der Zeichenketten des Suchbegriffes mit den Zeichenketten der Begleitinformation, die über das Internet verfügbar ist, wird das Suchergebnis über die audiovisuelle Ausgabeeinheit A/V zusammen mit dem Entscheidungsmenü ausgegeben. Hat die Programmführungseinrichtung PE ein Suchergebnis gefunden, das aus einem oder mehreren Treffern besteht, führt die Programmführungseinrichtung PE automatisch die Filterung mindestens hinsichtlich Dopplungen und Empfangbarkeit der Medieninhalte aus.
Die automatische Filterung kann auch während der Suche ausgeführt werden, es ist nicht notwendig, dass erst das Ergebnis der Suche gefiltert wird.
Es können Medieninhalte gleich während der Suche unberücksichtigt bleiben, wenn sie entsprechend der Geräteeinstellungen nicht zum lokalen Gebiet oder Sprachgebiet gehören oder mit den vorhandenen Komponenten des Fernsehempfängers TV nicht empfangbar sind.

Da der Suchbegriff gespeichert wird, steht dieser sofort oder nach Aktualisierung der Begleitinformation für eine weitere Suche zur Verfügung. Eine Bearbeitung des Suchbegriffes kann ausgeführt oder ein neuer Suchbegriff eingegeben und empfangen werden, um eine neue Suche mit der Programmführungseinrichtung PE zu starten und ausführen zu lassen.

In einer besonderen Ausführungsform der Erfindung ist die Begleitinformation, welche die Medieninhalte definiert, in den nichtflüchtigen Speichermitteln Spm auch dann noch vorhanden, wenn der entsprechende Medieninhalt nicht mehr zum Empfang bereitsteht. Diese noch gespeicherte Begleitinformation bietet eine weitere vorteilhafte Möglichkeit, um eine Suchanfrage für eine Suchfunktion zu definieren, wenn beispielsweise ein Medieninhalt, der den Nutzer interessiert, bereits gesendet und nicht aufgenommen wurde. Mit dem gespeicherten Titel als Suchbegriff wird überprüft, ob dieser Medieninhalt wiederholt wird und es möglich ist, einen Aufnahme-Timer AT zu setzen.
Die Programmführungseinrichtung PE löscht definiert in regelmäßigen Abständen, beispielsweise alle 7 Tage, Begleitinformation zu Medieninhalten, die bereits gesendet wurden.

In einer weiteren Ausführungsform der Erfindung, die nicht in den Figuren dargestellt ist, kann der Nutzer die Suchfunktion derart ausrichten, dass die Programmführungseinrichtung PE die Zeichenketten des Suchbegriffes mit den Zeichenketten der gespeicherten Zusatzinformation von Medieninhalten vergleicht. Dieser Suchbegriff ist dann nicht Bestandteil des Titels des Medieninhaltes, sondern bezieht sich auf ergänzende Information, wie den Namen des Regisseurs, das Erscheinungsjahr des Medieninhalts oder den Namen eines Schauspielers.

In einer weiteren Ausführungsform der Erfindung erkennt die Programmführungseinrichtung PE fehlerhafte Aufnahmen von Medieninhalten. Dazu liest die Programmführungseinrichtung PE aus den Speichermitteln Spm für einen Mediendienst, für den ein Aufnahme-Timer AT gesetzt wurde und eine Aufnahme initiiert werden soll, die voraussichtliche Aufnahmedauer aus der Begleitinformation oder der Zusatzinformation aus. Die Programmführungseinrichtung PE führt nach der erfolgten Aufnahme einen Vergleich der ausgelesenen wahrscheinlichen Aufnahmedauer mit der tatsächlichen Aufnahmedauer aus. Ist die tatsächliche Aufnahmedauer kürzer als die ausgelesene Aufnahmedauer des Medieninhaltes, wiederholt die Programmführungseinrichtung PE automatisch die Suche mit dem gespeicherten Suchbegriff nach dem Medieninhalt und nimmt diesen, wenn er zum Empfang bereitgestellt wird, erneut auf. Wurde der Medieninhalt erneut aufgenommen, wird die fehlerbehaftete zu kurze Aufnahme vom Speichermedium, beispielsweise einer Festplatte, durch die Programmführungseinrichtung PE automatisch gelöscht.

Bei den verschiedenen beschriebenen Ausführungsvarianten, bei denen entweder noch im Menü M zur Suchfunktion gleich ein Aufnahme-Timer vorgesehen wird und bei denen der Nutzer erst nach Ausgabe des Suchergebnisses aus verschiedenen Optionen auswählt, findet eine automatische Filterung des Suchergebnisses, welches Begleitinformation zu mehreren Medieninhalten umfasst, statt. Die Filterung erfolgt anhand:
∘ einer Überprüfung der von technischen Parametern abhängigen Zugriffsmöglichkeiten des Fernsehempfängers TV auf Mediendienste, welche frei zugänglich oder nur mit einem entsprechenden Modul zu entschlüsseln und empfangbar sind,
∘ einer Überprüfung der Begleitinformation und Zusatzinformation von den Medieninhalten, um identische Medieninhalte anhand von Zeichenketten zu selektieren und zu verhindern, dass diese mehrfach im Suchergebnis aufgeführt werden, wobei die identischen Medieninhalte zeitgleich von verschiedenen Medienquellen und Mediendiensten oder mit zeitlichem Versatz von einer oder verschiedenen Medienquellen und Mediendiensten bereitgestellt werden,
∘ eines Abgleichs der Treffer mit den Einstellparametern des Fernsehempfängers TV, wie der lokalen und sprachlichen Einstellung, der bewirkt, dass im Suchergebnis nur solche Medieninhalte aufgeführt werden, die der im Fernsehempfänger TV gespeicherten Einstellung entsprechen, somit werden beispielsweise Medieninhalte berücksichtigt, deren zugehörige Audiodaten nur in Spanisch empfangbar sind, wenn Deutschland als Parameter für die lokale oder sprachliche Einstellung gewählt ist.

In einer Ausführungsform der vorliegenden Erfindung unterscheidet die Programmführungseinrichtung PE zwischen einem identischen und einem gleichen Medieninhalt. Unter einem identischen Medieninhalt im Sinne der vorliegenden Erfindung wird solch ein Medieninhalt verstanden, der beispielsweise einen Spielfilm betrifft, der von unterschiedlichen Mediendienstanbietern, aber mit identischem Inhalt bereitgestellt wird, wie beispielsweise der Spielfilm mit dem Titel "Eine Frage der Ehre". Dieser Spielfilm kann von verschiedenen Mediendienstanbietern mit gleicher Anfangszeit oder mit zeitlichem Versatz zum Fernsehempfang bereitgestellt werden.
Unter gleichem Medieninhalt im Sinne der vorliegenden Erfindung werden solche Medieninhalte verstanden, die einen identischen Titel besitzen, wie beispielsweise "Elefant, Tiger & Co.", aber unterschiedliche Inhalte entsprechend einer Folge oder Serie beinhalten. Solche gleichen Medieninhalte kann die Programmführungseinrichtung PE entsprechend der gespeicherten Zusatzinformation, welche die Daten der Begleitinformation ergänzt, erkennen und voneinander unterscheiden. Das heißt, wird nach der Serie "Elefant, Tiger & Co." gesucht, kann die Programmführungseinrichtung PE in der Trefferübersicht des Suchergebnisses ergänzend die Nummer einer Serie angeben. Es ist vorteilhaft, wenn im Suchergebnis jede Serie, auch wenn sie beispielsweise von verschiedenen Mediendienstanbietern zum Empfang bereitgestellt wird, nur einmal berücksichtigt wird.
Ziel dieser Unterscheidung ist, dass ein Spielfilm nur einmal aufgenommen werden soll und von einem Medieninhalt, der aus mehreren Serien besteht, soll jede Serie auch nur einmal aufgenommen werden.
Eine Serie kann an unterschiedlichen Wochentagen, Uhrzeiten und von unterschiedlichen Mediendiensten, beispielsweise dem Westdeutschen Rundfunk, dem Hessischen Rundfunk oder dem "ZDF", bereitgestellt und vom Fernsehempfänger TV empfangen werden.

Mit der vorliegenden Erfindung ist es möglich, einen Medieninhalt, der Bestandteil einer Serie ist, zur Aufnahme zu markieren. Für den Nutzer ist wichtig, dass der Medieninhalt komplett und alle empfangbaren Serienteile nur einmal aufgezeichnet werden. Dazu überprüft die Programmführungseinrichtung PE die Zusatzinformation. Kurzfristige Änderungen am empfangbaren Programm ermittelt die Programmführungseinrichtung PE anhand der Aktualisierung der Begleitinformation. Erst dann löst die Programmführungseinrichtung PE die Aufnahmefunktion zum markierten Medieninhalt aus.

Ist die Suche beispielsweise nach einem manuell eingegebenen Suchbegriff im Menü M erfolglos, kann die Programmführungseinrichtung PE mit dem Suchbegriff nach seiner Speicherung eine erneute Suchfunktion auslösen. Das heißt, es kann mit der erfindungsgemäßen Programmführungseinrichtung PE auch nach solchen Medieninhalten gesucht werden, zu denen noch keine Begleitinformation in den Speichermitteln Spm zur Verfügung steht. Die Programmführungseinrichtung PE führt in regelmäßigen Abständen automatisch eine erneute Suche mit den gespeicherten Suchbegriffen durch. Diese erneute Suche kann zum Beispiel gestartet werden, nachdem eine Aktualisierung der Begleitinformation erfolgt ist und bis ein Suchergebnis gefunden, der Suchbegriff gelöscht wurde oder bis zu einem benutzerdefinierten Zeitpunkt. Auch dann wird dem Nutzer das Suchergebnis am Bildwiedergabeschirm ausgegeben.

Die Filterung des Suchergebnisses, welche nach erfolgter Suche oder gleichzeitig mit der Suche abläuft, ist vorteilhaft, weil durch die Zunahme der bereitgestellten Mediendienste, der Mediendienstanbieter und deren TV-Dienste sowie Medieninhalte das Suchergebnis auf der einen Seite vollständig und umfangreich, aber auf der anderen Seite unübersichtlich ist, wenn eine ausgeführte Suche im Suchergebnis zu viele Treffer beinhaltet. Zu den Rundfunkdiensten der "ARD" zählt beispielsweise der Westdeutsche Rundfunk, der Mitteldeutsche Rundfunk und "ARTE".

In einer weiteren Ausführungsform der Erfindung bietet die Programmführungseinrichtung PE nach erfolgter Suche automatisch verschiedene Funktionen, wie beispielsweise das Aufnehmen eines Medieninhaltes oder einer Serie, einen automatischen Wechsel von einem auf einen anderen Mediendienst und Beschaffungsoptionen eines Medieninhaltes über das Internet, zur Auswahl an.
In einer besonderen Ausführungsform der vorliegenden Erfindung markiert die Programmführungseinrichtung im Suchergebnis einen Medieninhalt für eine Aufnahmefunktion, welcher internen Auswahlregeln genügt. Zu den internen Auswahlregeln zählen die nachfolgenden:
▪ identische Medieninhalte sollen nur einmal zur Aufnahme markiert werden, um Dopplungen in der Trefferübersicht zu vermeiden,
▪ ein Medieninhalt aus einer Gruppe von identischen Medieninhalten wird vorzugsweise zur Aufnahme markiert, wenn durch die Aufnahme andere Bedienfunktionen, wie das Ansehen beziehungsweise die Wiedergabe eines aktuell empfangbaren Medieninhaltes, nicht behindert wird,
▪ Verfügbarkeit des über einen Mediendienstanbieter bereitgestellten Medieninhaltes.

Zum Beispiel wird der Medieninhalt "Elefant, Tiger & Co." um 19:00 Uhr und um 1:00 Uhr nachts von einem Mediendienstanbieter zum Empfang bereitgestellt, würde der Medieninhalt um 1:00 Uhr nachts zur Aufnahme markiert werden. Zur Erfassung der Zeiten, in denen der Nutzer den Fernsehempfänger nicht nutzt, dienen die Nutzungsdauer-Erfassungsmittel

Da es kurzfristig zu Änderungen an der Bereitstellung der empfangbaren Medieninhalte durch die Mediendienstanbieter kommen kann, werden die Daten für die Aufnahmefunktion, welche aus einer Suchanfrage heraus generiert werden soll, in regelmäßigem Abstand aktualisiert. Durch diese Vorgehensweise werden kurzfristig Änderungen an der Bereitstellung der Medieninhalte berücksichtigt und zusätzlich wird die Speicherkapazität des Fernsehempfängers nicht unnötig mit falschen Medieninhalten belastet.

Bei der vorangehend beschriebenen Erfindung wird die Suchfunktion nach Medieninhalten, die durch Begleitinformation definiert sind, auf komfortable Weise mit Funktionen, wie einem Aufnahme-Timer AT und einem Umschalt-Timer UT, verbunden.

## Patentansprüche

1. Digitaler Fernsehempfänger (TV) zum Bereitstellen einer komfortablen Suchfunktion nach einem Medieninhalt der durch eine Begleitinformation definiert ist, der aufweist:
- ein Empfangsteil (ET), das dazu ausgebildet ist, eine Begleitinformation, welche Zeichenketten und eine Bereitstellungszeit eines Medieninhalts umfasst, aus einem Datenstrom auszulesen und an ein Speichermittel (Spm) weiterzuleiten,
- ein Nutzungsdauer-Erfassungsmittel (Em), das dazu ausgebildet ist, einen Zeitabschnitt zu ermitteln, in dem der Fernsehempfänger (TV) sich im Empfangsbetrieb befindet, und den ermittelten Zeitabschnitt an das Speichermittel (Spm) weiterzuleiten,
- eine Programmführungseinrichtung (PE), die dazu ausgebildet ist,
∘ nach einem Aufruf ein Menü (M) zu generieren, welches Felder für eine Eingabe eines aus Zeichenketten bestehenden Suchbegriffes (SB) sowie ein Feld zur Auswahl einer Funktionen aufweist,
∘ die Suchfunktion nach einer Eingabe im Menü (M) durch den Nutzer auszuführen, indem die Programmführungseinrichtung (PE) nach Übereinstimmungen der Zeichenkette des Suchbegriffes (SB) mit den Zeichenketten der im Speichermittel (Spm) gespeicherten Begleitinformation sucht, und ein Suchergebnis zur Initiierung einer ausgewählten Funktion im Speichermittel (Spm) zu speichern,
∘ das Suchergebnis anhand der Bereitstellungszeit dahin gehend zu überprüfen, ob ein Medieninhalt mehrfach zum Empfang bereitsteht,
∘ Bereitstellungszeiten eines mehrfach zum Empfang bereitstehenden Medieninhalts mit dem ermittelten Zeitabschnitt zu vergleichen und,
∘ wenn eine Bereitstellungszeit eines Medieninhalts, der mehrfach zum Empfang bereitsteht, außerhalb des ermittelten Zeitabschnitts liegt, diesen Medieninhalt für die ausgewählte Funktion zu markieren,
**dadurch gekennzeichnet, dass**
- das Nutzungsdauer-Erfassungsmittel (Em), ferner dazu ausgebildet ist, den Zeitabschnitt anhand einer Systemzeit des Fernsehempfängers (TV) Wochentagen sowie einer Uhrzeit, die dem jeweiligen Zeitpunkt des Einschaltens entspricht, zuzuordnen und
- den Zeitabschnitt mit der entsprechenden Zuordnung an die Speichermittel (Spm) zur Speicherung weiterzuleiten.

2. Digitaler Fernsehempfänger (TV) nach Anspruch 1, bei dem die Funktion einen Aufnahme-Timer (AT) zur Aufnahme eines Medieninhaltes oder einen Umschalt-Timer (UT) zum Wechsel zwischen verschiedenen Mediendiensten betrifft.

3. Digitaler Fernsehempfänger (TV) nach einem der vorhergehenden Ansprüche, bei dem die Programmführungseinrichtung (PE) dazu ausgebildet ist, für einen Aufnahme-Timer eine voraussichtliche Aufnahmedauer aus einer Begleitinformation auszulesen.

4. Digitaler Fernsehempfänger (TV) nach Anspruch 3, bei dem die Programmführungseinrichtung (PE) dazu ausgebildet ist, eine tatsächliche Aufnahmedauer mit der ausgelesenen Aufnahmedauer zu vergleichen und wenn die tatsächliche Aufnahmedauer kürzer als die ausgelesene Aufnahmedauer ist, automatische eine erneute Suche mit einem Aufnahme-Timer zu initiieren.

5. Verfahren zum Bereitstellen einer komfortablen Suchfunktion für einen Nutzer nach einem Medieninhalt, der durch eine Begleitinformation definiert ist, mit einem digitalen Fernsehempfänger (TV), mit den nachstehenden Schritten:
- Auslesen einer Begleitinformation, welche Zeichenketten eines Titels und eine Bereitstellungszeit eines Medieninhalts umfasst, aus einem Datenstrom und Weiterleiten der Begleitinformation zum Speichern mithilfe eines Empfangsteils (ET),
- Ermitteln von einem Zeitabschnitt, in dem der Fernsehempfänger (TV) sich im Empfangsbetrieb befindet, Weiterleiten des ermittelten Zeitabschnitts an ein Speichermittel (Spm) und Speichern des ermittelten Zeitabschnitts,
- Generieren eines Menüs (M), welches Felder für eine Eingabe eines aus Zeichenketten bestehenden Suchbegriffes (SB) sowie ein Feld zur Auswahl einer Funktion aufweist, mithilfe einer Programmführungseinrichtung (PE),
- Ausführen der Suchfunktion nach einer Eingabe im Menü (M) durch den Nutzer, durch ein Suchen nach Übereinstimmungen der Zeichenkette des Suchbegriffes mit den Zeichenketten der gespeicherten Begleitinformation, mittels der Programmführungseinrichtung (PE),
- Überprüfen des Suchergebnisses anhand der Bereitstellungszeit dahingehend, ob ein Medieninhalt mehrfach zum Empfang bereitsteht,
- Vergleichen von Bereitstellungszeiten eines mehrfach zum Empfang bereitstehenden Medieninhaltes mit dem ermittelten Zeitabschnitt und
- Markieren eines Medieninhalts für die ausgewählte Funktion, wenn eine der Bereitstellungszeiten eines Medieninhalts der mehrfach zum Empfang bereitsteht, außerhalb des ermittelten Zeitabschnitts liegt, mithilfe der Programmführungseinrichtung (PE),
**dadurch gekennzeichnet, dass** das Verfahren ferner die nachfolgenden Schritte aufweist,
- Zuordnen der Zeitabschnitte anhand einer Systemzeit des Fernsehempfängers (TV) zu Wochentagen und einer Uhrzeit, die dem jeweiligen Zeitpunkt des Einschaltens entspricht und
- Weiterleiten der Zeitabschnitte mit der entsprechenden Zuordnung an die Speichermittel (Spm) zum Speichern.

## Claims

1. A digital television receiver (TV) for providing a convenient search function for a media content that is defined by accompanying information, comprising:
- a receiving part (ET) designed to retrieve accompanying information comprising character strings and a provision time of a media content from a data stream and to forward this information to a storage means (Spm),
- a usage duration detecting means (Em) adapted to detect a period of time in which said television receiver (TV) is in reception mode and to transmit said detected period of time to said storage means (Spm),
- a programme management device (PE) designed,
∘ when called up, to generate a menu (M) comprising boxes for entering a search term (SB) consisting of character strings and a box for selecting a function,
∘ when entered so in the menu (M) by the user, to execute the search function by searching the programme management device (PE) for matches of the character string of the search term (SB) with the character strings of the accompanying information stored in the storage means (Spm), and to store a search result for initiating a selected function in the storage means (Spm),
∘ to check the search result against the provision time to see if a media content is available for multiple reception,
∘ to compare the provision times of a media content that is available for multiple reception with the determined period of time,
∘ if a provision time of a media content that is available for multiple reception is outside the determined time period, to mark such media content for the selected function,
**characterised in that**
- the usage time detection means (Em) is further designed to assign the period of time, on the basis of a system time of the television receiver (TV), to weekdays and a time of day that correspond to the particular time of switching on, and
- to transmit the period of time with the corresponding assignment to the storage means (Spm) for storage.

2. A digital television receiver (TV) according to Claim 1 where the function concerns a recording timer (AT) for recording a media content or a switching timer (UT) for switching between different media services.

3. Digital television receiver (TV) according to one of the preceding claims, in which the programme management device (PE) is designed to retrieve an estimated recording duration from accompanying information for a recording timer.

4. A digital television receiver (TV) according to Claim 3, where the programme management device (PE) is designed to compare an actual recording duration with the retrieved recording time, and, if the actual recording time is shorter than the retrieved recording time, to automatically initiate a new search with a recording timer.

5. A method for providing a user with a convenient search function for a media content that is defined by accompanying information, in a digital television receiver (TV), comprising the steps below:
- retrieving from a data stream an accompanying information comprising character strings of a title and a provision time of a media content, and transmitting the accompanying information for storage by means of a receiving part (ET),
- detecting a period of time in which said television receiver (TV) is in reception mode, transmitting said detected period of time to said storage means (Spm), and storing said detected period of time,
- generating a menu (M) comprising boxes for entering a search term (SB) consisting of character strings and a box for selecting a function by a programme management device (PE),
- executing the search function, when entered so in the menu (M) by the user, by searching for matches of the character string of the search term (SB) with the character strings of the accompanying information by the programme management device (PE),
∘ checking the search result against the provision time to see if a media content is available for multiple reception,
∘ comparing the provision times of a media content that is available for multiple reception with the determined period of time, and
∘ marking a media content for the selected function if one of the provision times of a media content that is available for multiple reception is outside the determined time period by the programme management device (PE),
**characterised in that** the method further comprises the following steps:
- assigning the periods of time, on the basis of a system time of the television receiver (TV), to weekdays and a time of day that correspond to the particular time of switching on, and
- transmitting the periods of time with the corresponding assignment to the storage means (Spm) for storage.

## Revendications

1. Récepteur de télévision numérique (TV) pour la mise à disposition d'une fonction de recherche d'un contenu de média défini par une information d'accompagnement, comprenant :
- une partie réceptrice (PR) conçue pour lire une information d'accompagnement constituée de chaînes de caractères et d'une durée de disponibilité d'un contenu de média dans un flux de données et à la transmettre à un dispositif mémoire (DMém),
- un dispositif de mesure de durée d'utilisation (DMes) conçu pour déterminer une période dans laquelle le récepteur de télévision (TV) est en mode de réception, et pour transmettre la période déterminée au dispositif mémoire (DMém),
- un dispositif de guide de programme (DG) conçu pour
∘ générer, après un appel, un menu (M) comprenant des zones de saisie d'un terme de recherche (TR) composé de chaînes de caractères et d'une zone de sélection d'une fonction,
∘ exécuter la fonction de recherche après une saisie effectuée par l'utilisateur dans le menu (M) en recherchant, avec le dispositif de guide de programme (DG), des correspondances de la chaîne de caractère du terme de recherche (TR) et des chaînes de caractères de l'information d'accompagnement enregistrée dans le dispositif mémoire (DMém), et enregistrer un résultat de recherche dans le dispositif mémoire (DMém) pour lancer une fonction sélectionnée,
∘ contrôler le résultat de recherche par rapport à la durée de disponibilité afin de vérifier si un contenu de média est disponible plusieurs fois à la réception,
∘ comparer les durées de disponibilité d'un contenu de média disponible plusieurs fois à la réception et la période déterminée, et,
∘ si une durée de disponibilité d'un contenu de média disponible plusieurs fois à la réception se situe à l'extérieur de la période déterminée, sélectionner ce contenu de média pour la fonction sélectionnée,
**caractérisé en ce que**
- le dispositif de mesure de durée d'utilisation (DMes) est conçu en plus pour attribuer la période aux jours de la semaine et à une heure correspondant à l'heure d'activation respective en fonction d'une horloge système du récepteur de télévision (TV) et
- transmettre la période avec l'attribution correspondante au dispositif mémoire (DMém) pour l'enregistrement.

2. Récepteur de télévision numérique (TV) selon la revendication 1, **caractérisé en ce que** la fonction concerne une minuterie d'enregistrement (ME) pour l'enregistrement d'un contenu de média, ou une minuterie de commutation (MC) pour la commutation entre différents contenus de média.

3. Récepteur de télévision numérique (TV) selon l'une des revendications précédentes, **caractérisé en ce que** le dispositif de guide de programme (DG) est conçu pour lire une durée d'enregistrement prévue dans une information d'accompagnement pour une minuterie d'enregistrement.

4. Récepteur de télévision numérique (TV) selon la revendication 3, **caractérisé en ce que** le dispositif de guide de programme (DG) est conçu pour comparer une durée d'enregistrement réelle et la durée d'enregistrement lue et, si la durée d'enregistrement réelle est plus courte que la durée d'enregistrement lue, lancer automatiquement une nouvelle recherche avec une minuterie d'enregistrement.

5. Procédé permettant de mettre une fonction de recherche conviviale à la disposition d'un utilisateur pour la recherche d'un contenu de média défini par une information d'accompagnement avec un récepteur de télévision numérique (TV), le procédé étant constitué des étapes suivantes :
- lire une information d'accompagnement constituée de chaînes de caractères d'un titre et d'une durée de disponibilité d'un contenu de média dans un flux de données et transmettre l'information d'accompagnement pour l'enregistrement avec une partie réceptrice (PR),
- déterminer une période dans laquelle le récepteur de télévision (TV) est en mode de réception, transmettre la période déterminée au dispositif mémoire (DMém) et enregistrer la période déterminée,
- générer un menu (M) comprenant des zones de saisie d'un terme de recherche (TR) composé de chaînes de caractères et d'une zone de sélection d'une fonction, avec un dispositif de guide de programme (DG),
- exécuter la fonction de recherche après une saisie effectuée par l'utilisateur dans le menu (M) en recherchant des correspondances de la chaîne de caractère du terme de recherche et des chaînes de caractères de l'information d'accompagnement enregistrée avec le dispositif de guide de programme (DG),
∘ contrôler le résultat de recherche par rapport à la durée de disponibilité afin de vérifier si un contenu de média est disponible plusieurs fois à la réception,
∘ comparer des durées de disponibilité d'un contenu de média disponible plusieurs fois à la réception et la période déterminée et
∘ sélectionner un contenu de média pour la fonction sélectionnée si une durée de disponibilité d'un contenu de média disponible plusieurs fois à la réception se situe à l'extérieur de la période déterminée, ,avec le dispositif de guide de programme (DG),
**caractérisé en ce que** le procédé est constitué en plus des étapes suivantes :
- attribuer les périodes aux jours de la semaine et à une heure correspondant à l'heure d'activation respective en fonction d'une horloge système du récepteur de télévision (TV) et
- transmettre les périodes avec l'attribution correspondante au dispositif mémoire (DMém) pour l'enregistrement.
